# EUROPEAN PATENT APPLICATION

(11) **EP 3 570 408 A1**
(43) Date of publication of application: **20.11.2019**
(21) Application number: 18202202.0
(22) Date of filing: 24.10.2018
(51) Int. Cl.: H02J 7/35, H02S 20/30, H02S 30/20

(54) **SOLAR POWER SUPPLY DEVICE, POWER EMERGENCY DRAW-BAR BOX AND POWER SUPPLY SYSTEM**

(30) Priority: 15.05.2018 CN 201820722947 U
(71) Applicant: Miasole Photovoltaic Technology Co., Ltd., Beijing (CN)
(72) Inventor: CAI, Yaohe, Beijing, Beijing (CN)
(74) Representative: Modiano, Gabriella Diana

(57) **Abstract**

A solar power supply device includes a main body, a foldable solar power generation assembly and an electric energy output device. The main body includes a plurality of side walls enclosing a storage cavity. The solar power generation assembly is movably connected with a first side wall of the plurality of side walls and can be unfolded outward and folded to be stored in the storage cavity. A power emergency draw-bar box includes a solar power supply device, a draw-bar and a wheel installed at a bottom end of the main body. A power supply system includes a plurality of solar power supply devices electrically connected through aviation plugs and aviation sockets.

## Description

This application claims priority to the Chinese patent application No. 201820722947.7, entitled "Solar Power Supply Device, Power Emergency Draw-Bar Box and Power Supply System", filed on May 15, 2018, the entire content of which is incorporated into this disclosure by reference.

### Technical Field

The present application relates to, but is not limited to, the field of power supply equipment, and more particularly relates to a solar power supply device, a power emergency draw-bar box, and a power supply system.

### Background

A solar power supply device can independently generate electricity by using a solar panel assembly, thus meeting the requirements of power supply for many outdoor environments far away from urban areas and unable to access mains supply. However, in case of emergency, the transportation of solar power supply device and the installation of solar panel assembly are time-consuming and laborious, and it is unable to quickly form a power supply system for emergency use. In particular, the failure to provide adequate power supply in time for emergency rescue and disaster relief in case of natural disasters or major events will cause the continuous deterioration of consequences of the accident.

### Summary

The following is a summary of the subject matter described in detail herein. This summary is not intended to limit the protection scope of the claims.

An embodiment of the present application provides a solar power supply device, which includes a main body, a foldable solar power generation assembly and an electric energy output device. The main body includes a plurality of side walls enclosing a storage cavity. The solar power generation assembly is movably connected with a first side wall of the plurality of side walls and can be unfolded outward and folded to be stored in the storage cavity. The electric energy output device is electrically connected with the solar power generation assembly and is arranged to output the electric energy converted by the solar power generation assembly.

An embodiment of the present application also provides a power emergency draw-bar box, which includes the solar power supply device described in the embodiment of the application, a draw-bar for pushing and pulling the main body, and a wheel installed at a bottom end of the main body.

An embodiment of the present application also provides a power supply system, which includes a plurality of solar power supply devices described in the embodiment of the application, an electrical connector male part and an electrical connector female part are respectively arranged on two opposite side walls of the main body of each of the plurality of solar power supply devices, and the plurality of solar power supply devices are electrically connected by matching the electrical connector male part and the electrical connector female part.

Other aspects will become apparent after reading and understanding the drawings and the detailed description.

### Brief Description of Drawings

The accompanying drawings are provided for a further understanding of the technical solutions of the present application and form a part of the specification, and together with the embodiments of the present application, serve to explain the technical solutions of the present application and do not constitute a limitation on the technical solutions of the present application.
FIG. 1 is a schematic diagram of external structure of a power emergency draw-bar box including a solar power supply device according to an embodiment of the present application. The solar power generation assembly is in a storage state and the second side wall is in a closed state.
FIG. 2 is a schematic diagram of three-dimensional structure of the power emergency draw-bar box shown in FIG. 1. The solar power generation assembly is in a storage state and the second side wall is in a closed state.
FIG. 3 is a schematic diagram of internal structure of the storage cavity of the power emergency draw-bar box shown in FIG. 1. The solar power generation assembly is in a folded state, and the second side wall and the draw-bar are not shown.
FIG. 4A is a schematic diagram of structure of the solar power generation assembly of the power emergency draw-bar box shown in FIG. 1 in an unfolded state. The connecting component is a flexible flip cloth, and the front side wall is in an open state.
FIG. 4B is a schematic diagram of structure of the solar power generation assembly of the power emergency draw-bar box shown in FIG. 1 in an unfolded state. The connecting component is a zipper, and the right side wall is in an open state.
FIG. 5 is a schematic diagram of structure of the solar power generation assembly of the power emergency draw-bar box shown in FIG. 1 in an unfolded state. The front side wall, the left side wall, the right side wall, the upper side wall and the lower side wall are in an open state.
FIG. 6 is a schematic diagram of structure of the solar power supply device according to an embodiment of the present application when three solar power generation assemblies are installed thereon and unfolded outward in three directions.
FIG. 7 is a schematic diagram of cross-sectional structure of a solar power generation assembly when stacked parallelly in a storage cavity according to an embodiment of the present application. The solar power generation assembly is connected to a side edge of the first side wall (rear side wall), and the black dot indicates the connecting position.
FIG. 8 is a schematic diagram of cross-sectional structure of two solar power generation assemblies when stacked parallelly according to an embodiment of the present application. The two solar power generation assemblies are respectively connected to two side edges of the first side wall (rear side wall).
FIG. 9 is a schematic diagram of cross-sectional structure of two solar power generation assemblies when stacked vertically according to an embodiment of the present application. The two solar power generation assemblies are respectively connected to the middle portion of the first side wall (rear side wall).
FIG. 10 is a schematic diagram of three-dimensional structure of a power supply system formed by connecting a plurality of solar power supply devices according to an embodiment of the present application. The solar power generation assemblies are in an unfolded state.
FIG. 11 is a schematic diagram of structure of a plurality of solar power generation assemblies of a solar power supply device when unfolded according to another embodiment of the present application.

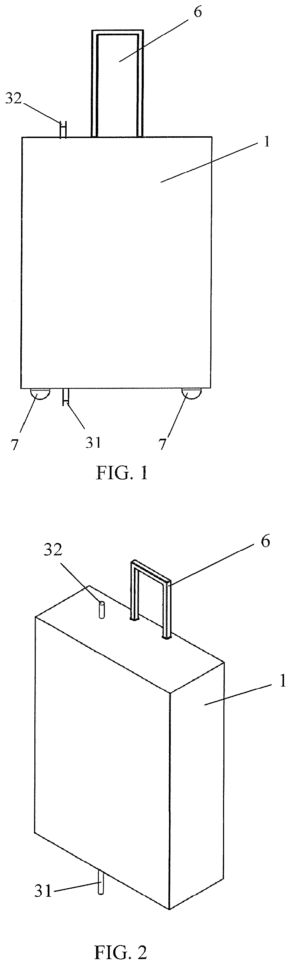

The correspondence between the reference signs and the components in FIGS. 1-11 is:
1 -- main body (box body), 11 -- storage cavity, 111 -- installation chamber, 12, 12a, 12b -- first side wall, 121 -- right side edge, 122 -- left side edge, 123 -- upper side edge, 124lower side edge, 13 -- second side wall, 130 -- opening, 14 -- flexible flip member (connecting component), 15 -- zipper, 2, 2a, 2b, 2c, 2d, 2e -- solar power generation assembly, 31 -- aviation plug, 32 -- aviation socket, 4 -- controller, 5 -- energy storage battery, 6 -- draw-bar, 7 -- wheel, 8 -- wire.

### Detailed Description

Examples of the present application will be described in detail below with reference to the accompanying drawings in order to make the objects, technical solutions and advantages of the present application more clearly understood. It should be noted that, if without conflict, the examples and features in the examples of the present application may be combined with each other arbitrarily.

At present, in order to meet the requirements of power supply for many outdoor environments far away from urban areas and unable to access mains supply, a portable solar energy box is provided. The portable solar energy box includes a box body, a solar panel arranged around the box body, a storage battery and related circuits built into the box body. The solar panel includes a plurality of sub-panels, and an interface circuit is embedded in the surface of the box body for connecting and supplying power to an external equipment. The solar power generation assembly of this portable solar energy box, i.e. the solar panel, is arranged outside the box body, so it cannot be protected well and is prone to pollution and damage. This portable solar energy box is also inconvenient to carry, and its structure is suitable for independent use and cannot be connected with each other to form a high-power solar power generation system.

Another solar mobile power supply draw-bar box is composed of a box body, a box cover, a telescopic draw-bar and a handle. The box cover is divided into two portions, one for accommodating a solar cell assembly and the other one for accommodating a power supply control panel and a power wire slot and serving as a storage cabinet. The storage space for the solar cell assembly (also called solar power generation assembly) of this draw-bar box is small, and the solar cell assembly needs to be taken outside the box body and supported by an additional bracket when being unfolded. When the solar cell assembly is taken out from and put back into the box body, the wire needs to be plugged and unplugged, which is inconvenient to operate and not suitable for constituting a high-power solar power generation system.

In order to solve the above problems, the present application provides a solar power supply device, which is simple and compact in structure, convenient to move and transport, time-saving and labor-saving in installation, thereby providing convenience for users.

As shown in FIGS. 1-10, the solar power supply device of this embodiment includes a main body 1, a foldable solar power generation assembly 2, and an electric energy output device. The main body 1 includes a plurality of side walls, and the side walls enclose a storage cavity. The solar power generation assembly 2 is movably connected (directly or indirectly) to a first side wall 12 of the plurality of side walls, and the solar power generation assembly 2 and the first side wall 12 can move relative to each other such as relative rotation, or relative movement. The solar power generation assembly 2 can be unfolded outward and folded to be stored in a storage cavity 11. That is, the solar power generation assembly 2 is configured to be stored in the storage cavity in the folded state and can be unfolded outside the storage cavity in the unfolded state. The electric energy output device is electrically connected with the solar power generation assembly and is arranged to output the electric energy converted by the solar power generation assembly 2. The direction along which the solar power generation assembly 2 is unfolded outward is not limited in the application, and it may be the same as the extending direction of the first side wall, but not limited thereto. In this embodiment, the plurality of side walls also include a second side wall 13, and when the second side wall 13 is opened, an opening 130 may be formed in the storage cavity 11 for unfolding the solar power generation assembly 2. The second side wall 13 may or may not be adjacent to the first side wall 12. For example, the second side wall 13 and the first side wall 12 may be two opposite side walls. The solar power supply device may include one or more second side walls 13. When the main body 1 itself takes the formation with a notch, the second side wall 13 may not be provided.

In an embodiment, a housing of the main body 1 and the side walls of the storage cavity 11 may all be made of metal, plastic, cloth or other materials, and a frame, or a substrate, or other structures of the main body 1 may be provided within the storage cavity 11. FIGS. 1-10 merely illustrate the example in which the main body includes six side walls, i.e., three pairs of opposite side walls, and the six side walls form a cuboid. However, it is not limited to the structure illustrated in FIGS. 1-10, the main body may be other polyhedrons, such as prism (triangular prism, or pentagonal prism), or pyramid. The main body may be a rotating body, such as a cone, a cylinder, or a frustum. On the main body of these shapes, one or more side walls serving as the first side wall may be connected to solar power generation assemblies, and these solar power generation assemblies have two states: being unfolded outside the storage cavity of the main body and being folded inside the storage cavity of the main body.

In an embodiment, the first side wall 12 is directly connected to the solar power generation assembly 2, for example, the substrate cloth of the first side wall 12 is connected to one end of the solar power generation assembly 2. When the end of the solar power generation assembly 2 is a wrapping cloth, the substrate cloth of the first side wall 12 and the wrapping cloth at one end of the solar power generation assembly 2 can be sewn together directly.

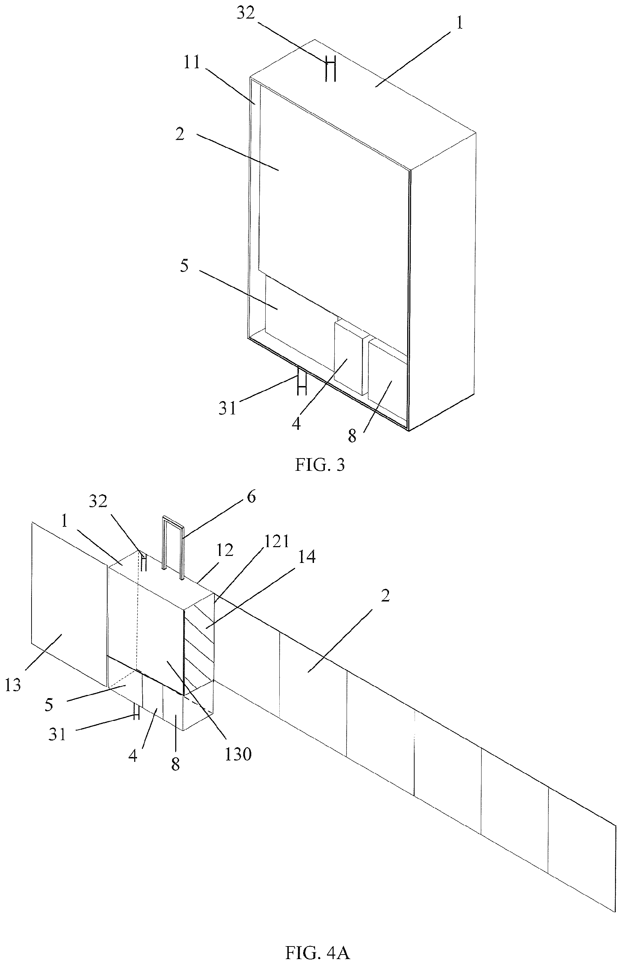

In an embodiment, the first side wall 12 and the solar power generation assembly 2 are movably connected by a connecting component, as shown in FIGS. 4A, 4B, 7 and 9. The connecting component may be provided on the solar power generation assembly 2 or on the first side wall 12. In an example, a part of the connecting component may be provided on the solar power generation assembly 2 and the other part is provided on the first side wall 12. In addition, the connecting component may also include an intermediate member. Specifically, as shown in FIG. 4A, in an example, the first side wall 12 is a rear side wall. The first side wall 12 and the solar power generation assembly 2 are connected by a flexible flip member 14, which may be, for example, a flexible flip cloth. The first side wall 12 is provided with a substrate material covering the inner wall of the storage cavity 11, which plays the role of insulation protection and convenient connection of the solar power generation assembly 2. One end of the flexible flip member 14 can be directly fixed, such as sewn, to the substrate of the storage cavity 11, while the other end is movably connected to the solar power generation assembly 2. The flexible flip member 14 and the solar power generation assembly 2 may be detachably movably connected by a zipper, a sticker, a hole, a rope, or a snap, etc. Alternatively, the flexible flip member 14 and the solar power generation assembly 2 may be non-detachably connected, such as by sewing. The flexible flip member 14 can provide a great degree of freedom for the connected solar power generation assembly 2. One end of the solar power generation assembly 2 can be folded over a side wall adjacent to the first side wall 12, such as the right side wall, through the flexible flip member 14. The flexible flip member 14 in FIG. 4A is connected to the left side of the solar power generation assembly 2, or the flexible flip member 14 can be connected to the right side of the solar power generation assembly 2, and it is convenient for the solar power generation assembly 2 to be stored in the storage cavity 11 in different stacking ways. The flexible flip member 14 may be a flexible flip cloth 14, or other forms such as a connecting rope, a connecting belt and the like connected between the solar power generation assembly 2 and the first side wall 12.

In the example shown in FIG. 4A, the solar power supply device includes a second side wall 13, that is, the front side wall of the main body shown in FIG. 4A, which is briefly referred to as front side wall below. The front side wall is detachably connected to three of the upper side wall, the lower side wall, the left side wall and the right side wall, such as by a zipper, so that the front side wall can be opened, for example to the left as shown in FIG. 4A. The front side wall and the left side wall may be non-detachably connected, such as integrally formed or sewn together. Alternatively, the front side wall and the left side wall may be detachably connected. When the solar power generation assembly 2 is stored, the flexible flip member 14 can be laid between the solar power generation assembly 2 and the first side wall 12. When the solar power generation assembly 2 is unfolded, the second side wall 13 is first opened to expose the opening 130, and then the flexible flip member 14 is folded over to move around the right side wall to the outside of the storage cavity 11 (the length of the flexible flip member 14 is sufficient), the foldable unit of the solar power generation assembly 2 connected thereto is moved to the outside of the right side wall, and then the solar power generation assembly 2 is unfolded toward the outside of the main body (i.e., toward the right) along the extending direction of the right side edge 121 of the first side wall 12 and laid on the carrier plane, such as but not limited to the ground substantially flush with the first side wall 12, or the solar power generation assembly 2 may be placed on a manually built platform.

In this embodiment, the solar power generation assembly 2 can be folded and stored in the storage cavity 11, as shown in FIG. 3, making the storage of the solar power generation assembly 2 safer and avoiding exposure and pollution damage. The connecting the solar power generation assembly 2 with the first side wall 12 by using the flexible flip member 14 is simple to process and low in cost. When the solar power generation assembly 2 is stored, the light, thin and soft flexible flip member 14 can be directly pressed between the solar power generation assembly 2 and the first side wall 12 basically without increasing additional installation space and overall weight, making the overall structure simple and compact and convenient to move. When the solar power generation assembly 2 is unfolded, the flexible flip member 14 is directly folded over the right side wall, and the foldable unit of the solar power generation assembly 2 connected thereto moves to the outside of the right side wall, so that the solar power generation assembly 2 can be unfolded toward the outside of the main body along the extending direction of the right side edge 121 of the first side wall 12 and laid on the carrier plane. The taking-out and unfolding operations are simple and convenient, and there is no need to additionally provide a supporting structure for the solar power generation assembly 2, so that the disassembly and assembly of the solar power generation assembly 2 is more time-saving and labor-saving and the disassembly and assembly efficiency is improved.

It can be understood that although the first side wall 12 is movably connected with the solar power generation assembly 2 by using a flexible flip member in this embodiment, the specific connection structure between the first side wall 12 and the solar power generation assembly 2 is not limited to this, they may be connected by other forms of connecting component provided on the solar power generation assembly 2 and/or the first side wall 12, and the movable connection between the first side wall 12 and the solar power generation assembly 2 may be a rotational connection, a sliding connection, or the like, and may be a detachable connection or a non-detachable connection.

A connecting component is provided between the first side wall 12 and the solar power generation assembly 2. When the first side wall 12 and the solar power generation assembly 2 are detachably connected, one of the first side wall 12 and the solar power generation assembly 2 may be detachably connected to the connecting component and the other one may be non-detachably connected to the connecting component. Alternatively, both the first side wall 12 and the solar power generation assembly 2 are detachably connected to the connecting component. When the connecting component includes two separate components, the first side wall 12 and the solar power generation assembly 2 are respectively non-detachably connected with one separate component. The non-detachable connection may be realized by means of forming integrally, or non-detachably adhering, binding, or sewing, etc. The detachable connection may be realized by means of an adhesive, a screw, a connecting rope, a zipper, or a clamp, etc.

The first side wall 12 and the solar power generation assembly 2 may be movably connected by means of a flexible flip member, a zipper, adhering, pivotal connection, buckling, snapping, or binding, etc. For example, the first side wall 12 and the solar power generation assembly 2 are adhered to each other by an adhesive member (such as hook and loop), or connected by a zipper, or buckled by buckles, snapped by a snapping member, pivotally connected by matching a shaft and a shaft sleeve, slidably connected by a chute and a slider, bound by a hole and a rope, bound by ropes, and so on. In an example, the connecting component between the solar power generation assembly 2 and the first side wall 12 is a sliding mechanism, and one end of the solar power generation assembly 2 can slide relative to the first side wall 12. For example, a slider may be provided at one end of the solar power generation assembly 2 and a chute may be provided on the first side wall 12, or a chute is provided on the solar power generation assembly 2 and a slider is provided on the first side wall 12, and so on, to realize sliding connection. In this case, the solar power generation assembly 2 can be slid out of the opening 130 and then unfolded by pulling it, and can be stored by pushing it after folded. In another example, the first side wall 12 is provided with a slot, and the solar power generation assembly 2 is provided with a buckle. When in use, the solar power generation assembly 2 is connected to the slot by the buckle, and then unfolded along the side wall.

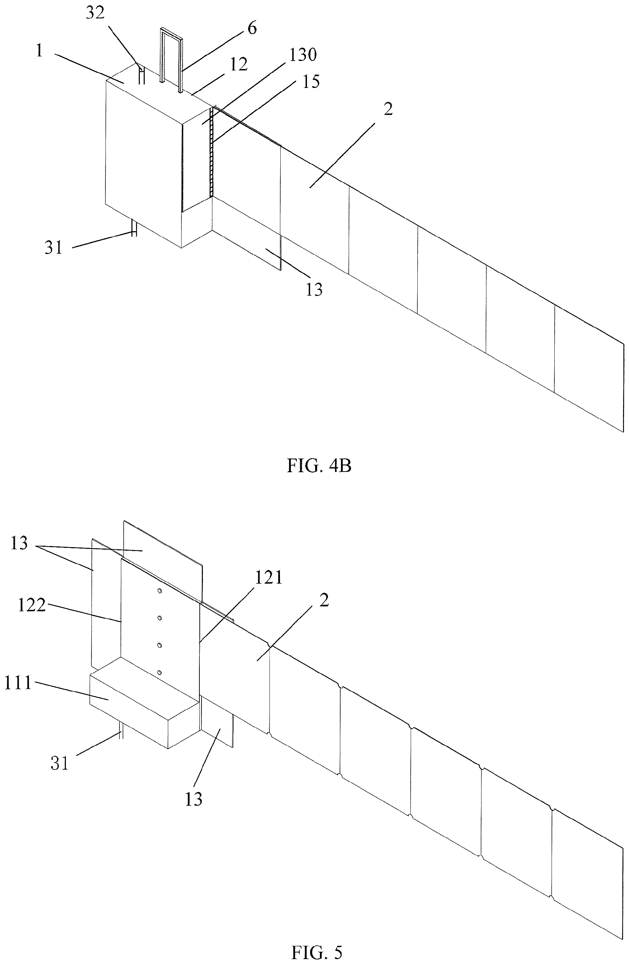

In an example shown in FIG. 4B, the first side wall 12 is a rear side wall and the second side wall 13 is a right side wall adjacent to the rear side wall. The solar power generation assembly 2 is connected to the right side edge of the first side wall by a zipper 15. When the second side wall 13 is opened, the solar power generation assembly 2 can be taken out directly from the opening 130 at the side face and unfolded outward along the right side edge of the first side wall.

By providing the connecting component, the connection mode and unfolding operation of the solar power generation assembly 2 on the first side wall 12 are more flexible and convenient. Because of the movable connection between the solar power generation assembly 2 and the electric energy output device, the electrical connection between the solar power generation assembly 2 and the electric energy output device can be done in advance. In the process of taking out and unfolding the solar power generation assembly 2 and folding and housing it into the storage cavity 11, the electrical connection between the solar power generation assembly 2 and the electric energy output device does not need to be switched off and on, that is, there is no need to plug and unplug. Therefore, the disassembly and assembly efficiency can be improved, and it is helpful for arrangement on a large scale so as to constitute a power generation system. For the present application, the specific connection structure between the first side wall 12 and the solar power generation assembly 2 is not limited to this, and they may be connected according to other embodiments.

In an embodiment, the foldable solar power generation assembly 2 may include a back plate, a solar cell chip layer and a front plate. The solar cell chip layer is formed by a plurality of solar cell chip units connected in series or in parallel. In an example, the back plate and the front plate may be manufactured and processed using flexible substrate. The solar cell chip can adopt a solar thin film cell chip. By combining and packaging the light, thin and flexible solar thin film cell chip with the flexible substrate, the solar power generation assembly 2 has the characteristics of light weight, water resistance and excellent folding performance, thereby improving the overall compactness of the folded solar power generation assembly 2, reducing the occupied space, keeping the plane flat after the solar power generation assembly 2 is unfolded, and ensuring that the solar thin film cell chip has a good light receiving angle.

When the solar power generation assembly 2 adopts a flexible thin film assembly, as shown in FIGS. 4A and 4B, the solar power generation assembly 2 is divided into a plurality of units of equal size, and these units are stacked together when folded. In another example, the solar power generation assembly 2 may be rolled up like a roller shutter to realize folding.

In another embodiment, the solar cell chip can be assembled by hard solar cell panels, for example, a plurality of solar cell panels are respectively installed in foldable support frames, and are fixed by the frame bodies of the support frames, and the plurality of frame bodies are connected through flexible connectors, so that folding and unfolding actions can be performed. The specific structural form of the solar power generation assembly 2 of the present application is not limited to the above two types, it may be implemented by other embodiments, such as hinge connection or gemel connection of a plurality of solar cell panels, which is not limited in the present application.

In this embodiment, in order to facilitate the opening of the second side wall 13 to form an opening 130 for unfolding the solar power generation assembly 2, the second side wall 13 and the first side wall 12 and other side walls may be connected in various different ways, for example, by a zipper, adhering, or buckling, which are not limited in the present application. In FIG. 4A, the second side wall 13 is the side wall (front side wall) opposite to the first side wall 12. The second side wall 13 can be detachably connected with the upper side wall, the lower side wall, the left side wall and the right side wall through adjacent side edges, and is turned to the left to open the opening 130, and then the solar power generation assembly 2 stored in the storage cavity 11 is taken out from the opening 130. When it is needed to unfold outward (that is, unfold leftward) the solar power generation assembly 2 along the extending direction of the left side edge 122 of the first side wall 12, only the second side wall 13 needs to be turned rightward to open the opening 130, and the solar power generation assembly 2 is unfolded outward along the extending direction of the left side edge 122, so that the second side wall 13 will not block the unfolding of the solar power generation assembly 2.

There may be one or two or more second side walls 13 to ensure that the solar power generation assembly 2 can be unfolded from the opening 130 when the second side wall 13 is opened. Specifically, in an embodiment, the solar power generation assembly 2 is movably connected to the right side edge 121 of the first side wall 12 or at other positions on the first side wall 12. Unlike FIG. 4A, the second side wall 13 at least includes a side wall (front side wall) opposite to the first side wall 12 and a side wall (right side wall) adjacent to the first side wall 12. The second side wall 13 can be opened by detachable connection with other side walls. After the second side wall 13 is opened, the solar power generation assembly 2 can be unfolded toward the outside of the main body along the extending direction of the right side edge 121 of the first side wall 12. Compared with FIGS. 4A and 4B, the opening is larger after the second side wall 13 is opened, which is suitable for unfolding the solar power generation assembly in various connection and stacking modes. In another embodiment, the second side wall 13 at lease includes a front side wall and a left side wall. After the second side wall 13 is opened, the solar power generation assembly 2 can be directly unfolded toward the outside of the main body along the extending direction of the left side edge 122 of the first side wall 12, and the solar power generation assembly 2 can be movably connected to the left side edge 122 of the first side wall 12 or at other locations on the first side wall 12. In another embodiment, the second side wall 13 at least includes a front side wall and an upper side wall. After the second side wall 13 is opened, the solar power generation assembly 2 can be unfolded toward the outside of the main body along the extending direction of the upper side edge 123 of the first side wall 12, and the solar power generation assembly 2 can be movably connected to the upper side edge 123 of the first side wall 12 or at other locations on the first side wall 12. In another embodiment, the second side wall 13 at least includes a front side wall and a lower side wall. After the second side wall 13 is opened, the solar power generation assembly 2 can be unfolded toward the outside of the main body along the extending direction of the lower side edge 124 of the first side wall 12, the solar power generation assembly 2 can be movably connected to the lower side edge 124 of the first side wall 12 or at other locations on the first side wall 12, and the electric energy output device is not installed on the lower side edge 124 of the first side wall 12. Of course, the second side wall 13 may adopt other combinations, for example, including the side wall adjacent to the first side wall but not including the front side wall; or including three or more of the front side wall, left side wall, right side wall, upper side wall and lower side wall. In an example, as shown in FIG. 5, all the other side walls except the first side wall 12 are the second side wall 13 (front side wall is not shown), that is, all the side walls of the main body except the first side wall 12 can be opened and laid on the plane where the first side wall 12 is located, thus facilitating the unfolding of the solar power generation assembly 2 along different directions according to needs and space constraints, which is not limited in the present application.

In the present application, when the solar power generation assembly 2 is movably connected to one side edge of the first side wall 12, it is not required to be connected to the outermost position, but may be located close to this side edge.

In order to facilitate the unfolding of the solar power generation assembly 2 along different directions, the connecting components on the first side wall 12 may be provided at a plurality of positions, for example, at a plurality of side edges of the first side wall, or at one side edge and a middle portion of the first side wall, or at the plurality of side edges and the middle portion of the first side wall. In an example, connecting components may be provided at one or more positions on the left side edge, the right side edge, the upper side edge, the lower side edge, and the middle portion of the first side wall, with one or more groups of connecting components at the same position, each group of connecting components for connecting one solar power generation assembly. For example, the plurality of side edges of the first side wall 12 are provided with connecting components; alternatively, one side edge and the middle portion of the first side wall 12 are provided with connecting components; alternatively, the plurality of side edges and the middle portion of the first side wall 12 are provided with connecting components. There may be one or more groups of connecting components provided on each side edge or at the middle portion for connecting one or more solar power generation assemblies. When the solar power generation assembly 2 is connected to the first side wall 12 through a connecting component provided on one side edge, it can be conveniently unfolded directly outward from the side edge. If the solar power generation assembly 2 is connected to the first side wall 12 through a connecting component provided at the middle portion, it can be unfolded in any direction.

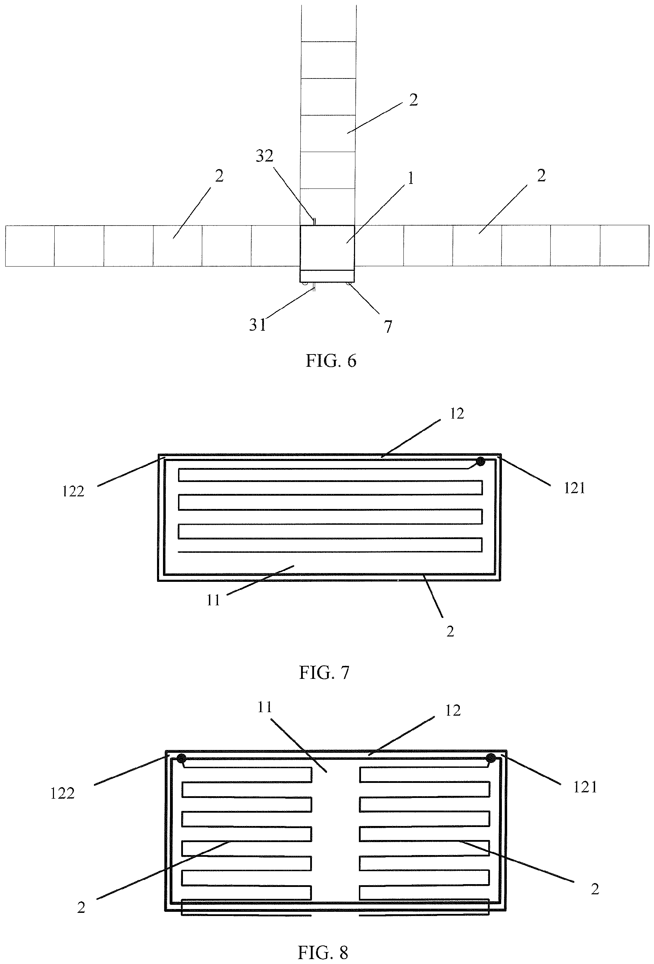

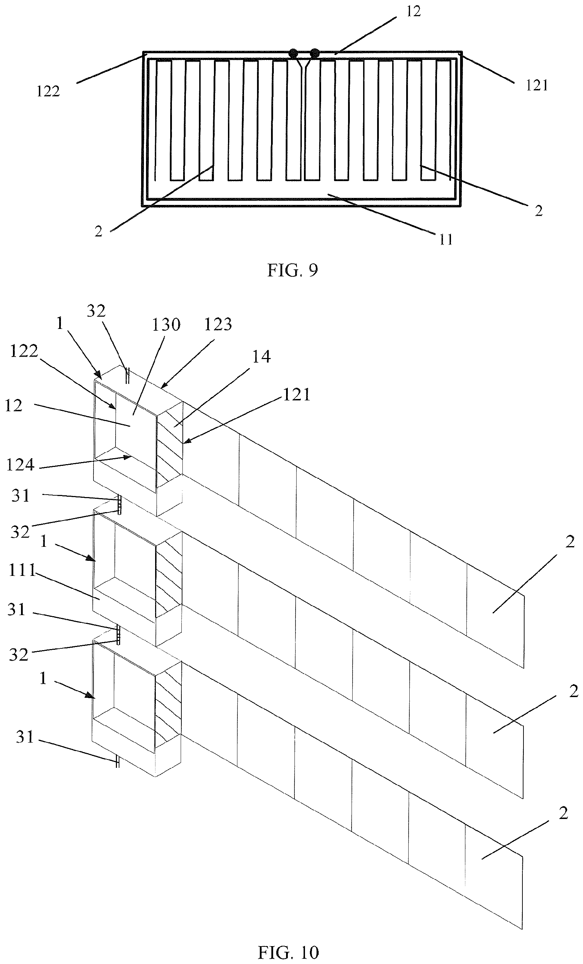

In some connection modes, the solar power generation assembly 2 and the first side wall 12 can rotate relatively after being connected through the connecting component. For example, one end of the solar power generation assembly 2 is adhered, or connected by a zipper, or buckled, or pivotally connected, to the first side wall 12. In this case, if the connecting component on the first side wall 12 is provided on the side edge, the solar power generation assembly 2 is connected to the side edge of the first side wall 12 through the connecting component, and the foldable units of the solar power generation assembly 2 are parallelly stacked on the first side wall 12 during storage (that is, the foldable units of the solar power generation assembly 2 are arranged in a direction parallel to the first side wall 12, as shown in FIGS. 7 and 8, the black dots in FIGS. 7 and 8 indicate the positions where the solar power generation assembly 2 and the first side wall 12 are connected. If the connecting component is provided in the middle portion of the first side wall 12, the solar power generation assembly 2 is connected with the middle portion of the first side wall 12 and unfolded outward, the foldable units of the solar power generation assembly 2 can be stacked perpendicular to the first side wall 12 during storage (that is, the foldable units of the solar power generation assembly 2 are arranged in a direction perpendicular to the first side wall 12, as shown in FIG. 9). When the solar power generation assembly 2 is unfolded and stored, the space requirements of the storage cavity 11 are different depending on whether it is stored in vertical stack or parallel stack. Thus, if the connecting components are provided both at the middle portion and at the side edge, the adaptability of the solar power generation assembly 2 to the space of the storage cavity can be improved, and when the solar power generation assembly 2 cannot be stored in the storage cavity in a certain stacking mode (such as parallel stack or vertical stack), it can be stored in the storage cavity in another stacking mode through connecting component at a different position.

For example, in FIG. 8, one end of the solar power generation assembly 2 is movably connected to the side edge of the first side wall 12 and is stacked parallelly during storage, the solar power generation assembly 2 cannot be completely stored in the storage cavity 11. However, if one end of the solar power generation assembly 2 is movably connected to the middle portion of the first side wall 12, as shown in FIG. 9, the solar power generation assembly 2 is vertically stacked during storage, it may be completely stored in the storage cavity 11.

When the connecting component includes a sliding mechanism, one end of the solar power generation assembly 2 connected to the first side wall 12 can slide relative to the first side wall 12 from the side edge to the middle portion, thus achieving a similar effect of improving the adaptability of the solar power generation assembly 2 to the space of the storage cavity. The connecting component may also include a sliding mechanism and a rotating mechanism, so that one end of the solar power generation assembly 2 can not only slide relative to the first side wall 12, but also rotate relative to the first side wall 12, therefore it can be more flexibly unfolded and stored and better in adaptability.

In an embodiment, there are a plurality of solar power generation assemblies 2. If there is enough installation space on the side edge of the first side wall 12, the plurality of solar power generation assemblies 2 can be connected to the same side edge of the first side wall 12 (any side edge of the first side wall 12) so that the plurality of solar power generation assemblies 2 are arranged side by side and unfolded outward along the extending direction of the same side edge so as to increase the number of the installed solar power generation assemblies 2 and improve the power generation efficiency of the solar power supply device. The plurality of solar power generation assemblies 2 may be connected to different side edges of the first side wall 12 so that the plurality of solar power generation assemblies 2 are unfolded outward in different directions. In another embodiment, there are a plurality of solar power generation assemblies 2, which are movably connected to the middle portion of the first side wall 12 and can be unfolded outward in one or more directions. For example, two groups of connecting components are arranged one above the other in the middle portion of the first side wall 12 for connecting two solar power generation assemblies that can be unfolded in the same direction, such as leftward or rightward. In another example, two groups of connecting components are arranged one left and one right in the middle portion of the first side wall 12 for connecting two solar power generation assemblies, one of the two solar power generation assemblies may be unfolded leftward, and the other one rightward. In another embodiment, there are a plurality of solar power generation assemblies 2, some of the plurality of solar power generation assemblies are movably connected with one or more side edges of the first side wall 12, and the other are movably connected with the middle portion of the first side wall 12; the plurality of solar power generation assemblies can be unfolded outward in one or more directions.

In an embodiment, part or all of the movable connection between the plurality of solar power generation assemblies 2 and the first side wall 12 is detachable connection. The detachable connection makes the connection mode and unfolding direction of the solar power generation assembly 2 on the first side wall 12 relatively more flexible, facilitates the installation and disassembly of the solar power generation assembly 2, and improves the disassembly and assembly efficiency. In particular, when a plurality of solar power generation assemblies 2 are folded and stored in the storage cavity, if spatial interference occurs, part of the solar power generation assemblies 2 can be detached and stacked on other solar power generation assemblies 2, so that the storage cavity can be fully utilized, thereby enabling the solar power supply device to have a larger power generation capacity.

In an embodiment, as shown in FIGS. 5 and 3, the storage cavity 11 is provided with a storage chamber for placing the solar power generation assembly 2 and an installation chamber 111 for placing the electric energy output device. The installation chamber 111 is provided on one side of the storage cavity 11 and avoids the unfolding space of the solar power generation assembly 2 (that is, the unfolding surface of the solar power generation assembly 2 does not affect the operation and use of the installation chamber 111). Specifically, the storage chamber of the solar power generation assembly 2 and the installation chamber 111 of the electric energy output device are respectively located on both sides of the storage cavity 11. The electric energy output device includes a controller 4 and an energy storage battery 5 which are electrically connected, the controller 4 is electrically connected to the solar power generation assembly 2, and may include one or more of a charging control device, an inverter, an electric information display circuit and an interface circuit embedded in the controller 4, and an operation panel embedded in the surface of the controller 4. The operation panel includes an electric information display panel and an interface use panel. The wire connected between the solar power generation assembly 2 and the electric energy output device may be placed in the space 8 on the right side of the installation chamber 111, and the space 8 may be a separate wire receiving chamber.

The electric energy output device of the present application is not limited to the above form. When the solar power supply device is mainly used to constitute a solar power generation system instead of being used alone, one or more of the energy storage battery of the electric energy output device, and the interface circuit, the inverter, the electric information display circuit and the operation panel in the controller may be omitted. These components can be centrally arranged in a solar power generation system composed of a plurality of solar power supply devices. The present application does not make any limitations on the specific structure of the solar power supply device.

The main body of the application may also include a plurality of storage cavities. For example, a new storage cavity is additionally provided except the existing storage cavity of the main body 1 shown in FIG. 3, and the front side wall of the existing storage cavity serves as the rear side wall of the new storage cavity. These storage cavities can be used to store items related to solar power generation, as well as other items.

When the solar power generation assembly 2 works, the solar power generation assembly 2 receives sunlight and converts solar energy into electric energy. The electric energy output device stores the electric energy converted by the solar power generation assembly 2 in the energy storage battery 5 through the charging control device. The interface circuit is used for connecting and supplying power to external equipment. In this embodiment, the solar power generation assembly 2, the controller 4 and the energy storage battery 5 are placed in the same storage cavity 11 by adopting a modular structure design, so that the solar power supply device has a compact structure and is convenient to move. And the electric energy output device is centrally installed at the lower end or bottom end of the storage cavity 11, leaving enough installation space for the solar power generation assembly 2 to meet the storage of more solar power generation assemblies 2. The controller 4 and the energy storage battery 5 are arranged on one side of the storage cavity 11, so that the operation panel on the surface of the controller 4 can be arranged on at least part of the side edge of the main body 1, thereby avoiding the unfolding direction of the solar power generation assembly 2. Therefore, the solar power generation assembly 2 can be normally installed and unfolded in multiple directions of the first side wall 12, and the unfolding plane of the solar power generation assembly 2 will not block the operation panel on the surface of the controller 4, and thus will not affect the normal use and operation of the controller 4 and the energy storage battery 5.

It should be noted that even if the solar power generation assembly 2 may block the operation panel portion on the controller 4 when it is unfolded outward, in the present application, the flexible flip member 14 with a window can be used as the connecting component between the solar power generation assembly 2 and the lower side edge 124 of the first side wall 12. When the solar power generation assembly 2 is unfolded, the flexible flip member 14 is folded over the lower side edge 124, pressed against the operation panel, and a part of the operation panel underneath the flexible flip member 14 is exposed through the window, so that the solar power generation assembly 2 can still be unfolded normally without blocking the operation panel, and will not affect the charging and discharging control operation process and the interface plug-in charging use process on the controller 4. In the present application, the interface circuit may have a variety of charging interfaces with different voltage magnitudes, and can meet the requirements of power supply for external equipment that requires different voltage values, such as mobile phones, computers, mobile power supplies, and lighting equipment.

As shown in FIGS. 1-10, in an embodiment, a side wall of the main body 1 is provided with an aviation plug 31, and the other side wall opposite to this side wall is provided with an aviation socket 32 which is matched with the aviation plug 31 for electrical connection between a plurality of solar power supply devices. The aviation plug 31 and the aviation socket 32 are electrically connected to the solar power generation assembly 2 or the electric energy output device. A plurality of solar power supply devices can be connected to constitute a solar power generation system, further increasing the number of solar power generation assemblies 2 and further improving power generation efficiency and power generation capacity. The aviation plug 31 and the aviation socket 32 are excellent in heat resistance, corrosion resistance and vibration resistance, the plug-in mode is simple and convenient, and the connection stability is high, thereby effectively ensuring the working stability between a plurality of connected solar power supply devices, meeting the working requirements of long-term, efficient, and large-flux power supply of the power supply system, and expanding the application range of the solar power supply system. Moreover, the electrical connection between the solar power supply devices can be realized by other forms of electrical connector male part and electrical connector female part.

In an embodiment, the aviation plug 31 and/or the aviation socket 32 are connected to the main body 1 and can rotate relative to the main body 1, such as hinge connection, or pivotal connection. The main body is provided with a groove (not shown in FIGS. 1-10) for receiving the aviation plug 31 and/or the aviation socket 32, and the aviation plug 31 and/or the aviation socket 32 can rotate between an initial position built into the groove of the main body 1 and a use position extending out of the main body 1. By adopting the built-in structural design, the solar power supply device has a simpler and more beautiful appearance structure, is beneficial to protecting the aviation plug 31 and the aviation socket 32, avoids occurrence of the situations that the aviation plug 31 and the aviation socket 32 are exposed and easily polluted and damaged, and enables the service life of the aviation plug 31 and the aviation socket 32 to be longer and the connection reliability to be higher. In the present application, the aviation plug 31 and/or the aviation socket 32 may be provided externally, which is not limited herein.

In an embodiment, the use process of the solar power supply device includes: quickly transporting the solar power supply device to the destination, then taking out the solar power generation assembly 2 from the storage cavity 11 and unfolding it, converting light energy into electric energy after the solar power generation assembly 2 receives sunlight, and storing the electric energy in the storage battery through the controller 4. When there is a need for electricity, the stored electric energy is transferred to the external equipment through the controller 4 by the energy storage battery 5 to supply power.

In an embodiment, the electric energy output device and the solar power generation assembly are pre-connected by a wire, and the electrical connector male part, the electrical connector female part and the electric energy output device are pre-connected by wires. In another embodiment, the electric energy output device and the solar power generation assembly are pre-connected by a wire, while the electrical connector male part, the electrical connector female part and the solar power generation assembly are pre-connected by wires, in which case the electric energy output device can be centrally arranged. When the solar power supply device is in use, the wire connection can be maintained, that is, plug and unplug are not needed.

In an embodiment of the present application, a solar power supply device is provided, which includes a main body 1, a foldable solar power generation assembly 2 and an electric energy output device. A plurality of side walls of the main body 1 enclose a storage cavity 11. There are a plurality of solar power generation assemblies 2, and the plurality of solar power generation assemblies 2 may be movably connected to different side edges of the first side wall 12, and may be unfolded toward the outside of the main body 1 along multiple directions of the first side wall 12 (e.g., along the extending directions of multiple side edges of the four side edges of the first side wall 12). The connection may be non-detachable connection or detachable connection.

As shown in FIG. 6, with the main body 1 that receives three solar power generation assemblies 2 as an example, the three solar power generation assemblies are movably connected to three side edges of the first side wall 12 (i.e., the right side edge 121, the left side edge 122, and the upper side edge 123 of the first side wall 12), respectively. When the solar power generation assemblies 2 are unfolded, the solar power generation assemblies 2 are sequentially taken out from the opening 130 and then unfolded toward the outside of the main body 1 along the extending directions of the respective side edges, with the final unfolded state as shown in FIG. 6. When the solar power generation assemblies 2 are stored, each of the solar power generation assemblies 2 is first folded to a corresponding side edge position along its respective side edge direction, and then the three solar power generation assemblies 2 are sequentially stored from the opening 130 and stacked parallelly or vertically on the first side wall 12 of the storage cavity 11 (as shown in FIG. 3, FIG. 7, and FIG. 9). By simultaneously connecting the solar power generation assemblies 2 to three side edges of the first side wall and unfolding these solar power generation assemblies, the power generation efficiency of the solar power supply device is improved and the power generation capacity is increased.

In an embodiment, there may be four solar power generation assemblies 2, which are movably connected to four side edges of the first side wall 12 and unfolded outward along the four side edge directions, respectively. Two of the solar power generation assemblies 2 are non-detachably connected to the left side edge 122 and the right side edge 121 of the first side wall 12 respectively. During storage, the two solar power generation assemblies 2 are respectively stacked parallelly or vertically on the left and right sides of the first side wall 12 after being folded.

FIG. 8 shows that two solar power generation assemblies 2 are stacked parallelly after being folded, and protrude outside the storage cavity 11. On the basis of this figure, the left side wall, the right side wall, the upper side wall and the lower side wall of the main body 1 are heightened to increase the distance between the front side wall and the rear side wall so that it can store three or four or more solar power generation assemblies 2. Two of the solar power generation assemblies 2 can always be movably connected to the left side edge and the right side edge of the first side wall 12 and stored against the first side wall 12. The remaining solar power generation assemblies 2 can be disassembled and stacked between the stored two solar power generation assemblies 2 and the front side wall.

In an example, two of the four solar power generation assemblies 2 are movably connected to the left side edge 122 and the right side edge 121 of the first side wall 12 in a non-detachable manner, respectively, while the other two solar power generation assemblies 2 are movably connected to the upper side edge 123 and the lower side edge 124 of the first side wall 12 in a detachable manner, respectively. While being unfolded, after the two detachable solar power generation assemblies 2 are taken out, they are respectively connected to the upper side edge 123 and the lower side edge 124 of the first side wall 12 and then unfolded outward along the extending direction of their respective side edges (i.e., the upper and lower side edges). The two non-detachable solar power generation assemblies 2 can be directly unfolded outward along the extending directions of the left side edge 122 and the right side edge 121, respectively.

In an example, the four solar power generation assemblies 2 are all detachably connected, and when unfolded, the four solar power generation assemblies 2 are sequentially taken out, respectively connected to the four side edges of the first side wall 12 and unfolded outward.

In an example, by increasing the size of the first side wall 12, more solar power generation assemblies 2 can be movably connected to the same side edge or middle portion of the first side wall 12 at the same time, and the number of solar power generation assembly 2 unfolded outward along the extending direction of the same side edge can be multiplied. For example, the left side edge of the first side wall 12 is movably connected to two solar power generation assemblies 2, and the right side edge is also movably connected to two solar power generation assemblies 2. The solar power generation assemblies 2 on the same side edge can be connected in the same or different ways. Alternatively, four solar power generation assemblies 2 are arranged in two rows and two columns, all movably connected to the middle portion of the first side wall 12.

FIG. 9 shows that two solar power generation assemblies 2 are vertically stacked in the storage cavity 11. The two solar power generation assemblies 2 are movably connected to the middle portion of the first side wall 12. By changing the size of the main body, the distance between the front side wall and the rear side wall or the size of the first side wall 12 is increased, such that it can store four solar power generation assemblies 2.

In an embodiment, the solar power generation assemblies 2 are vertically stacked (as shown in FIG. 9). Specifically, the solar power supply device includes four solar power generation assemblies 2, two solar power generation assemblies 2 of which are non-detachably connected to the middle portion of the first side wall 12 (or may be detachably connected to the middle portion of the first side wall 12) and can be respectively unfolded outward along the extending direction of the left side edge and the extending direction of the right side edge, while the other two solar power generation assemblies 2 of which are detachably connected to the upper side edge and the lower side edge of the first side wall 12. During storage, the two non-detachable solar power generation assemblies 2 are respectively folded and vertically stacked in the storage cavity 11 and stored against the first side wall 12. After the two detachable solar power generation assemblies 2 are removed, they are stacked on the outside of the non-detachable solar power generation assemblies 2 or other remaining space, and they may be stacked parallelly or vertically. While being unfolded, the two detachable solar power generation assemblies 2 are respectively connected with the upper side edge 123 and the lower side edge 124 of the first side wall 12 and unfolded outward along their respective extending directions. Then, the two non-detachable solar power generation assemblies 2 are pulled out of the opening 130 and unfolded outward along the extending direction of the left side edge and the extending direction of the right side edge, respectively. Alternatively, the two non-detachably connected solar power generation assemblies 2 may be arranged to be unfolded outward along the extending direction of the upper side edge 123 and the extending direction of the lower side edge 124, respectively. At this point, the two detachably connected solar power generation assemblies 2 are respectively connected to the left side edge 122 and the right side edge 121 of the first side wall 12 and unfolded outward along the extending direction of the left side edge and the extending direction of the right side edge, respectively. This embodiment makes the storage and unfolding of the solar power generation assemblies 2 more flexible and convenient.

In an embodiment, the number of solar power generation assemblies 2 may be more than four. For example, by increasing the installation space in the main body 1 (e.g., the length and width of the first side wall 12), a plurality of (e.g., three) solar power generation assemblies 2 can be movably connected to the same side edge or middle portion of the first side wall 12 at the same time, and the plurality of solar power generation assemblies 2 can be arranged and unfolded in parallel, thus maximizing the number of solar power generation assemblies 2 that can be installed and unfolded on the first side wall 12 and further increasing the power generation power and power generation capacity of the solar power supply device. The solar power generation assemblies 2 may be stacked in parallel or vertically. The first side wall 12 and the solar power generation assemblies 2 may be movably connected in detachable or non-detachable manner, or the like.

In an embodiment, the connection position of the plurality of solar power generation assemblies 2 and the first side wall 12 may be on the side edge or anywhere in the middle portion. Alternatively, it is possible that a part of the solar power generation assemblies is connected at the side edge and a part of which is connected at the middle portion. By reasonably setting the connection position, the solar power generation assemblies 2 can be connected to the connecting components at different positions, so as to conveniently and flexibly adjust the stacking mode of the foldable units of the solar power generation assemblies 2, thereby better adapting to the shape of the storage cavity 11, reducing the space occupied by stacking the solar power generation assemblies 2, and facilitating the storage and unfolding operations.

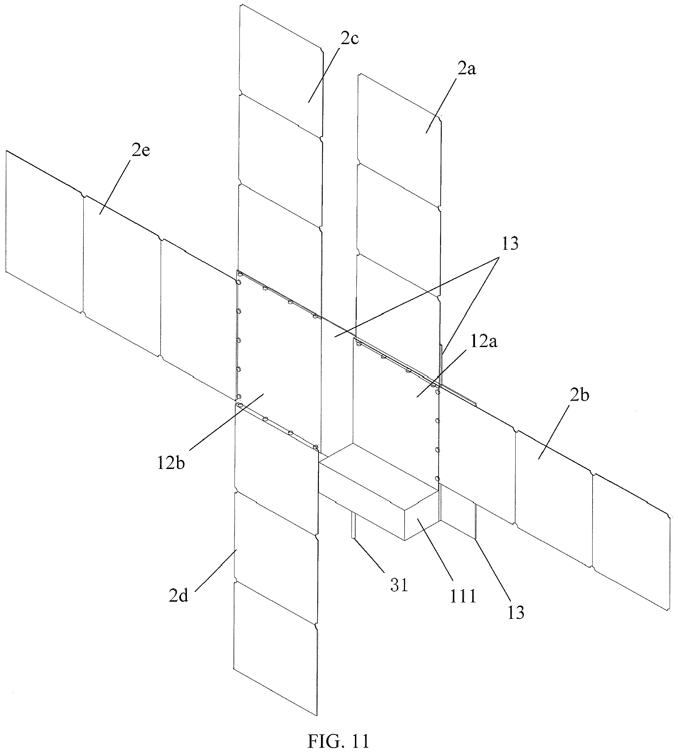

In an embodiment, as shown in FIG. 11, unlike the above embodiment, there are two first side walls for connecting the solar power generation assembly on the main body of the solar power supply device, i.e., a rear side wall 12a and a front side wall 12b. The second side wall 13 includes an upper side wall, a left side wall and a right side wall. The electric energy output device is installed in the installation chamber 111 on the lower side of the rear side wall 12a, and the installation chamber 111 may be separated from the storage chamber of the solar power generation assembly. The lower side wall is provided with an aviation plug 31 and the upper side wall is provided with an aviation socket 32 (not shown in FIG. 11).

In this embodiment, the front side wall 12b can be turned over to the plane where the rear side wall 12a is located, and both the front side wall 12b and the rear side wall 12a can be used to connect the solar power generation assembly. As shown in the figure, the upper side edge and the right side edge of the rear side wall 12a are provided with connecting components such as buckles, and the solar power generation assembly 2a is movably connected with the upper side edge of the rear side wall 12a and can be unfolded upward. The solar power generation assembly 2b is movably connected to the right side edge of the rear side wall 12a and can be unfolded rightward. The three side edges of the front side wall 12b, i.e., the upper side edge, the lower side edge and the left side edge, are all provided with connecting components such as buckles, to which three solar power generation assemblies 2c, 2d, 2e can be connected, respectively, and the three solar power generation assemblies 2c, 2d, 2e can be unfolded upward, downward, and leftward, respectively. In this embodiment, when there is enough space in the storage cavity, five solar power generation assemblies can be installed on one solar power supply device and can be unfolded simultaneously, greatly increasing the capacity of solar power generation. Moreover, since no electric energy output device is installed on the front side wall 12b, the size of the solar power generation assembly movably connected on the left side edge of the front side wall 12b can be larger than the size of the solar power generation assembly connected on the right side edge of the rear side wall 12a, and the power of solar power generation can be higher. These solar power generation assemblies are all movably connected to the side wall, thereby conveniently realizing the electrical connection with the electric energy output device without plugging and unplugging during unfolding and storage, conveniently realizing the unfolding and storage, and avoiding the troubles and mess caused by arbitrary placement of the assemblies.

In an embodiment, on the basis of FIG. 11, the rear side wall 12a may be connected with only one solar power generation assembly 2, and the front side wall 12b may be connected with only one or two solar power generation assemblies.

In an embodiment, there is one first side wall on the main body of the solar power supply device for connecting the solar power generation assembly, i.e., the front side wall instead of the rear side wall. In this case, the connecting components on the rear side wall 12a shown in FIG. 11 can be eliminated. The front side wall 12b may be provided with connecting components on the right side edge in addition to retaining the connecting components on the three side edges shown in FIG. 11, so as to connect four solar power generation assemblies simultaneously. By selecting the front side wall where the electric energy output device is not installed to connect the solar power generation assembly, the electric energy output device will not block the unfolding of the solar power generation assembly, so the solar power generation assemblies can be unfolded on more side edges. Moreover, the size of the solar power generation assemblies unfolded in the left and right directions can be made larger. Therefore, the power generation capacity of this embodiment can be larger.

To sum up, the solar power generation assembly of the embodiment of the present application can be folded and stored in the storage cavity, so that the solar power generation assembly can be stored more safely, the exposure and pollution damage can be avoided, and the overall structure is more compact and convenient to move and transport. The movable connection between the first side wall and the solar power generation assembly can be a rotary connection, a sliding connection or the like, can be a detachable connection or a non-detachable connection, and can have a plurality of movable connection positions to achieve the purpose of facilitating the removal, installation and disassembly of the solar power generation assembly. The solar power generation assembly can be unfolded toward the outside of the main body along the extending direction of any side edge of the first side wall and can be directly laid on the carrier plane without the need of additionally providing a supporting structure for the solar power generation assembly and the need of electric plugging and unplugging, so that the disassembly and assembly of the solar power generation assembly is more time-saving and labor-saving, and the disassembly and assembly efficiency is improved.

Based on the same inventive concept, an embodiment of the present application also provides a power emergency draw-bar box, which includes any of the solar power supply devices described above, a draw-bar 6 for pushing and pulling the main body 1 (i.e., the box body of the draw-bar box), and a wheel 7 (also called a roller) installed at the bottom end of the main body 1. As shown in FIGS. 1-4, the solar power generation assembly 2, the controller 4, and the energy storage battery 5 are installed in the storage cavity 11 of the main body 1. One side wall of the main body 1 (the lower side wall in FIGS. 1-4) is provided with an aviation plug 31, and the other side wall opposite to this side wall (the upper side wall in FIGS. 1-4) is provided with an aviation socket 32 for electrical connection of a plurality of power emergency draw-bar boxes. The aviation plug 31 and/or the aviation socket 32 are pivotally connected to the main body 1, the main body is provided with a groove for installing the aviation plug 31 and/or the aviation socket 32, and the aviation plug 31 and/or the aviation socket 32 can rotate between an initial position built into the groove of the main body 1 and a use position extending out of the main body 1.

As shown in FIGS. 1 and 2, the box structure of the power emergency draw-bar box in this embodiment is similar to the structure of a common luggage draw-bar box. The draw-bar 6 is connected to the main body 1 and is telescopic, and can be arranged in an installation groove on a side wall such as a rear side wall. When the draw-bar 6 is not needed, the extended portion of the draw-bar 6 can be retracted into the installation groove of the main body 1 without affecting the unfolding of the solar power generation assembly 2 along the rear side wall toward the side edge of the side where the draw-bar 6 is located. When the power emergency draw-bar box is moved, the draw-bar 6 is pulled out and cooperated with the wheel 7, so as to quickly move the power emergency draw-bar box and improve the moving efficiency. Optionally, the draw-bar 6 and the main body 1 may be detachably connected. In this case, the main body 1 may not be provided with an installation groove for installing the draw-bar 6. When not in use, the draw-bar 6 is stored in the storage cavity 11 in the main body 1, and when in use, the draw-bar 6 is taken out and pivotally connected with the outer side wall of the main body 1 to move the power emergency draw-bar box, thus simplifying the structure of the installation groove for the draw-bar 6 and making the overall structure simpler. In addition, in this embodiment, the solar power generation assembly 2, the controller 4, the energy storage battery 5 and the like are all integrally installed in the storage cavity 11 of the main body 1, making the overall structure of the power emergency draw-bar box relatively compact and convenient to move. Through the cooperation of the aviation plug 31 and the aviation socket 32, the quick and stable connection of a plurality of power emergency draw-bar boxes can be realized, so as to meet the use requirements of quickly forming an emergency power supply system for emergency rescue and disaster relief with high disassembly and assembly efficiency and high power generation efficiency.

In other embodiments of the present application, depending on the application occasion, the aviation plug and the aviation socket may be changed to other types of electrical connector male part and electrical connector female part.

The installation and disassembly method of the solar power generation assembly in the power emergency draw-bar box of the embodiment of the present application is the same as that of the solar power supply device of the embodiment of the present application, which saves time and labor, and can meet the requirement of quickly forming a power supply system for emergency rescue and disaster relief in case of emergency situation.

### Power supply system

Based on the same inventive concept, an embodiment of the present application also provides a power supply system, which includes a plurality of (at least two) solar power supply devices according to any one of the above embodiments, and the plurality of solar power supply devices are electrically connected by matching an electrical connector male part and an electrical connector female part (such as the aviation plug 31 and the aviation socket 32). In an example, the power supply system may be formed by connecting a plurality of power emergency draw-bar boxes. FIG. 10 takes three solar power supply devices as an example. The lower side wall of the main body 1 of each solar power supply device is provided with an aviation plug 31 and the upper side wall is provided with an aviation socket 32. The electrical connection between two solar power supply devices is realized by matching the aviation plug 31 and the aviation socket 32. The solar power supply devices can be connected in parallel or in series, or partially in parallel and partially in series.

As shown in FIG. 10, the main bodies 1 of three solar power supply devices are arranged in the longitudinal direction (up and down direction in FIG. 10), and the solar power generation assemblies 2 installed on the upper main body 1 may be connected to the left side edge 122, the right side edge 121, and the upper side edge 123 of the first side wall 12, respectively, and then unfolded toward the outside of the main body along the extending directions of these side edges. FIG. 10 shows an example of a solar power generation assembly 2 unfolded along the left side edge 122 of the first side wall 12 of the main body 1. The solar power generation assemblies 2 installed on the lower main body 1 may be connected to the left side edge 122, the right side edge 121, and the lower side edge 124 of the first side wall 12, respectively, and then unfolded toward the outside of the main body along the extending directions of these side edges. FIG. 10 shows an example of a solar power generation assembly 2 unfolded along the left side edge 122 of the first side wall 12 of the main body 1. The solar power generation assemblies 2 installed on the main body 1 located in the middle may be connected to the left side edge 122 and the right side edge 121 of the first side wall 12, respectively, and then unfolded toward the outside of the main body along the extending directions of these side edges. FIG. 10 shows an example of a solar power generation assembly 2 unfolded along the left side edge 122 of the first side wall 12 of the main body 1. In this example, up to eight solar power generation assemblies can be used (the number of solar power generation assemblies may be larger when one side edge is connected with multiple solar power generation assemblies). A solar power supply system, i.e. solar power generation system, can be constructed by sequentially connecting plugs and sockets on three solar power supply devices during installation. In FIG. 10, only the side edges of the upper main body are signed, and the corresponding signs of the main body in the middle and the lower main body are omitted.

In the solar power supply system, the number of the installed solar power generation assemblies 2 is increased, which further increases the power generation efficiency and power generation capacity, meets the working requirements of long-term, efficient, and large-flux power supply of the power supply system, and expands the application range of the solar power supply system. In this embodiment, the aviation plug 31 and/or the aviation socket 32 are designed with a built-in structure, but may otherwise be provided with an external type or a split type. In this embodiment, three solar power supply devices are used, but two, four or more solar power supply devices can be combined quickly for use by matching the aviation socket 32 and the aviation plug 31, so that a power supply system with large power generation capacity can be quickly formed in the emergency case to meet the power use requirements for emergency rescue and disaster relief.

In another embodiment, unlike the previous embodiment, the aviation plug 31 may be provided on the left side wall or the right side wall of the main body 1 of the solar power supply device. Correspondingly, the aviation socket 32 is provided on the right side wall or the left side wall of the main body 1, and the electrical connection between two solar power supply devices is realized by matching the aviation plug 31 and the aviation socket 32. In this case, the main bodies 1 of two solar power supply devices can be arranged in the transverse direction. The solar power generation assemblies 2 installed on the left main body 1 may be connected to the upper side edge 123, the lower side edge 124, and the left side edge 122 of the first side wall 12, respectively, and then unfolded toward the outside of the main body along the extending directions of these side edges. The solar power generation assemblies 2 installed on the right main body 1 may be connected to the upper side edge 123, the lower side edge 124, and the right side edge 121 of the first side wall 12, respectively, and then unfolded toward the outside of the main body along the extending directions of these side edges. When more than three solar power supply devices are connected to each other, except for the leftmost and rightmost solar power supply devices, the solar power generation assemblies 2 on the main body 1 of the solar power supply device located in the middle can be respectively connected with the upper side edge 123 and the lower side edge 124 of the first side wall 12, and then unfolded toward the outside of the main body along the extending directions of these side edges.

In this embodiment, although the aviation plug 31 and the aviation socket 32 are provided on the side wall of the main body 1, they may otherwise be provided on the solar power generation assembly 2. There are a plurality of solar power generation assemblies 2, one of which is provided with an aviation plug 31 and the other is provided with an aviation socket 32, and the electrical connection between the two solar power generation assemblies 2 is realized by matching the aviation plug 31 and the aviation socket 32. Therefore, the aviation plug 31 or the aviation socket 32 on the main body 1 of the solar power supply device can be matched with the aviation socket 32 or the aviation plug 31 on the solar power generation assembly 2 to realize the electrical connection between the solar power generation assembly 2 and the solar power supply device. Alternatively, the electrical connection between the solar power supply devices can be realized by matching the aviation socket 32 or the aviation plug 31 on the respective solar power generation assemblies. When the installation space on the solar power generation assembly 2 is small, the electrical connection between the plurality of solar power generation assemblies 2 can be realized by adopting a connection lead or matching common plug and socket, and the specific structural mode of the plug and socket on the solar power generation assembly 2 is not limited in the present application.

The power supply system of the embodiment of the present application realizes the electrical connection between a plurality of solar power supply devices by matching the aviation plug and the aviation socket, the connection process is convenient to operate, and the connection stability and reliability are high. Therefore, the number of solar power generation assemblies can be further increased, the power generation efficiency and the power generation capacity are further improved, which facilitates the expansion of the application range of the solar power supply system.

The above embodiments of the present application at least have the following beneficial effects:
1) The solar power generation assembly can be connected with one or more of the four side edges of the first side wall and unfolded outward along the extending directions of these side edges to increase the number of solar power generation assemblies installed and further increase the power generation efficiency.
2) The solar power generation assembly can be folded and stored in the storage cavity, so that the storage safety of the solar power generation assembly is high, the overall structure is compact, and transportation is convenient. During unfolding and use, the solar power generation assembly can be directly laid on the carrier plane after being unfolded along the first side wall without additionally providing a supporting structure, so that the disassembly and assembly process is simple and convenient and the disassembly and assembly efficiency is high.
3) By connecting the solar power generation assembly to the connecting components at different positions, it is convenient to flexibly adjust the folding mode of the solar power generation assembly, so that it can better adapt to the shape of the storage cavity, and it is more convenient to unfold, store and use.
4) The solar power generation assembly, the controller and the energy storage battery are designed in an integrated modular structure, so they occupy a small space; and the unfolding plane of the solar power generation assembly will not block the normal use of the operation panel on the controller.
5) The electrical connection between a plurality of solar power supply devices is realized by using an aviation plug and an aviation socket, and the connection is convenient, stable and reliable to form a solar power supply system with high power generation efficiency, large power generation capacity and long service life.

In the description of the embodiments of the present application, it should be noted that the orientation or positional relationship indicated by the terms "up", "down", "left", "right", "front", "back", "inside", "outside", "outward", "longitudinal", "transverse", "one side", "the other side", "one end", "the other end", "edge", "opposite", "corresponding", "side wall", "side edge" and the like is based on the orientation or positional relationship shown in the drawings, only for the convenience of describing the embodiments of the present application and simplifying the description, but is not intended to indicate or imply that the referred structure has a specific orientation, is constructed and operated in a specific orientation, and therefore cannot be understood as a limitation on the embodiments of the present application.

In the description of the embodiments of this application, the terms "connect", "detachably connect", "non-detachably connect", "fixedly connect", "movably connect", "pivotally connect", "install", and "assemble", should be broadly interpreted unless otherwise clearly specified or defined. For example, the connection may be a fixed connection, a detachable connection, or an integral connection. The terms "install", "connect" and "fixedly connect" can be interpreted as connecting directly or indirectly through an intermediate media. For those ordinary skilled in the art, the specific meaning of the above terms in the embodiments of this application can be interpreted according to the specific context.

## Claims

1. A solar power supply device comprising:
a main body (1) comprising a plurality of side walls enclosing a storage cavity (11);
a foldable solar power generation assembly (2);
an electric energy output device electrically connected with the solar power generation assembly (2) and configured to output electric energy converted by the solar power generation assembly (2);
wherein the solar power generation assembly (2) is movably connected with a first side wall (12) of the plurality of side walls and is configured to be stored in the storage cavity (11) in a folded state and unfolded outside the storage cavity (11) in an unfolded state.

2. The solar power supply device according to claim 1, wherein the plurality of side walls further comprise at least one second side wall (13), and the second side wall (13) is openable to form an opening (130) for unfolding the solar power generation assembly (2).

3. The solar power supply device according to claim 1 or 2, wherein the solar power generation assembly (2) is provided with a connecting component, or the first side wall (12) is provided with a connecting component, or both the solar power generation assembly (2) and the first side wall (12) are provided with connecting components, and the first side wall (12) and the solar power generation assembly (2) are movably connected through the connecting component.

4. The solar power supply device according to claim 3, wherein when the first side wall (12) is provided with a connecting component,
the connecting component on the first side wall (12) is arranged at a plurality of side edges of the first side wall (12); or
the connecting component on the first side wall (12) is arranged at one side edge and a middle portion of the first side wall (12); or
the connecting component on the first side wall (12) is arranged on the plurality of side edges and the middle portion of the first side wall (12).

5. The solar power supply device according to claim 3 or 4, wherein the connecting component comprises a sliding mechanism, and one end of the solar power generation assembly (2) is slidable relative to the first side wall (12) through the sliding mechanism; or
the connecting component comprises a sliding mechanism and a rotating mechanism, and one end of the solar power generation assembly (2) is slidable and rotatable relative to the first side wall (12) through the sliding mechanism and the rotating mechanism; or
the connecting component comprises a flexible flip member (14), and one end of the solar power generation assembly (2) is capable of being folded over a side wall adjacent to the first side wall (12) through the flexible flip member (14).

6. The solar power supply device according to claim 1, wherein there are a plurality of solar power generation assemblies (2);
the plurality of solar power generation assemblies (2) are movably connected with one or more side edges of the first side wall (12) and capable of being unfolded outward in one or more directions; or
the plurality of solar power generation assemblies (2) are movably connected with a middle portion of the first side wall (12) and capable of being unfolded outward along one or more directions; or
some of the plurality of solar power generation assemblies (2) are movably connected with one or more side edges of the first side wall (12), and the others are movably connected with the middle portion of the first side wall (12), and the plurality of solar power generation assemblies (2) are capable of being unfolded outward in one or more directions.

7. The solar power supply device according to claim 6, wherein part or all of the movable connection between the plurality of solar power generation assemblies (2) and the first side wall (12) is detachable connection.

8. The solar power supply device according to claim 2, wherein the other side walls of the plurality of side walls except the first side wall (12) are the second side walls (13).

9. The solar power supply device according to claim 1, wherein the electric energy output device is installed on one of the plurality of side walls;
the first side wall (12) comprises a side wall on which the electric energy output device is installed; or the first side wall (12) comprises a side wall opposite to the side wall on which the electric energy output device is installed; or the first side wall (12) comprises a side wall on which the electric energy output device is installed and a side wall opposite to the side wall on which the electric energy output device is installed.

10. The solar power supply device according to any one of claims 1-9, wherein the storage cavity (11) is provided with a storage chamber for placing the solar power generation assembly (2) and an installation chamber (111) for placing the electric energy output device, and the installation chamber (111) is provided on one side of the storage cavity (11) and avoids an unfolding space of the solar power generation assembly (2).

11. The solar power supply device according to claim 10, wherein the electric energy output device comprises a controller (4) and an energy storage battery (5) which are electrically connected, the controller (4) and the energy storage battery (5) are arranged in the installation chamber (111), and the installation chamber (111) further comprises a space for placing wires (8) comprising a wire connected between the solar power generation assembly (2) and the electric energy output device.

12. The solar power supply device according to any one of claims 1-11, wherein two opposite side walls of the main body (1) are respectively provided with an electrical connector male part and an electrical connector female part to realize electrical connection between different solar power supply devices, and the electrical connector male part and the electrical connector female part are both electrically connected with the solar power generation assembly (2) or the electric energy output device.

13. The solar power supply device according to claim 12, wherein the electrical connector male part and the electrical connector female part are connected to the main body (1) and rotatable relative to the main body (1), the main body (1) is provided with grooves for installing the electrical connector male part and the electrical connector female part, and the electrical connector male part and the electrical connector female part are rotatable between an initial position built into the groove and a use position extending out of the main body (1).

14. A power emergency draw-bar box, comprising the solar power supply device according to any one of claims 1-13, a draw-bar (6) for pushing and pulling the main body (1), and a wheel (7) installed at a bottom end of the main body (1).

15. A power supply system comprising a plurality of the solar power supply devices according to claim 12 or 13, wherein the plurality of solar power supply devices are electrically connected with each other by matching the electrical connector male part and the electrical connector female part.
